# EUROPÄISCHE PATENTANMELDUNG

(11) **EP 2 273 135 A2**
(43) Veröffentlichungstag der Anmeldung: **12.01.2011**
(21) Anmeldenummer: 10007073.9
(22) Anmeldetag: 09.07.2010
(51) Int. Cl.: F16B 5/06, F16B 19/10

(54) **Vorrichtung zum Verbinden mindestens zweier Teile**

(30) Priorität: 09.07.2009 DE 102009032682
(71) Anmelder: Läpple AG, 74076 Heilbronn (DE)
(72) Erfinder: Weinand, Hans-Joachim, 71254 Ditzingen (DE); Pfitzenmaier, Ralf, 74177 Bad Friedrichshall-Duttenberg (DE)
(74) Vertreter: Ullrich & Naumann

(57) **Zusammenfassung**

Eine Vorrichtung zum Verbinden mindestens zweier vorzugsweise flächiger Teile, mit einem Befestigungskörper (3) zum Hinein- bzw. Hindurchstecken durch die Teile (1, 2), wobei der Befestigungskörper (3) einen vor den Teilen (1, 2) zur Anlage dienenden Kopf (4) und einen in und/oder hinter den Teilen (1, 2) zum Klemmen dienenden Spreizbereich aufweist, ist **dadurch gekennzeichnet, dass** der Befestigungskörper (3) als Hülse (6) mit einem an der Oberfläche eines ersten Teils (1) zur Anlage kommenden Hülsenkopf (4) ausgeführt ist und dass ein Dorn, Stift oder Bolzen (8) vorgesehen ist, der von der Vorderseite des ersten Teils (1) her in die Hülse (6) eingesteckt und unter Aufweitung des Spreizbereichs (5) in die Hülse hineingedrückt bzw. hineingepresst wird.

## Beschreibung

Die Erfindung betrifft eine Vorrichtung zum Verbinden mindestens zweier vorzugsweise flächiger Teile, mit einem Befestigungskörper zum Hinein- bzw. Hindurchstecken durch die Teile, wobei der Befestigungskörper einen vor den Teilen zur Anlage dienenden Kopf und einen in und/oder hinter den Teilen zum Klemmen dienenden Spreizbereich aufweist.

Bei der hier in Rede stehenden Vorrichtung handelt es sich letztendlich um Verbindungsmittel, die geeignet sind, beispielsweise zwei Bleche miteinander zu verbinden. Eine solche Verbindung ist beispielsweise in vorteilhafter Weise anwendbar bei der Montage eines als Schürze ausgebildeten Unterfahrschutzes an Leitplanken.

Herkömmliche Vorrichtungen der gattungsbildenden Art erfordern den Einsatz spezieller Werkzeuge. Dies gilt es zu vermeiden.

Der vorliegenden Erfindung liegt daher die Aufgabe zugrunde, eine Vorrichtung der gattungsbildenden Art derart auszugestalten und weiterzubilden, dass die Verbindung zweier vorzugsweise flächiger Teile auf einfache Weise, möglichst ohne spezielles Werkzeug, möglich ist. Die Vorrichtung soll dabei einfach in der Konstruktion und preiswert in der Herstellung sein.

Die voranstehende Aufgabe ist durch die Merkmale des Patentanspruchs 1 gelöst. Danach ist die gattungsbildende Vorrichtung **dadurch gekennzeichnet, dass** der Befestigungskörper als Hülse mit einem an der Oberfläche eines ersten Teils zur Anlage kommenden Hülsenkopf ausgeführt ist und dass ein Dorn, Stift oder Bolzen vorgesehen ist, der von der Vorderseite des ersten Teils her in die Hülse eingesteckt und unter Aufweitung des Spreizbereichs in die Hülse hineingedrückt bzw. hineingepresst wird.

Erfindungsgemäß ist erkannt worden, dass es von Vorteil ist, den Befestigungskörper als Hülse, nämlich mit einem Durchgang, auszustatten. Die Hülse umfasst einen an der Oberfläche eines ersten Teils zur Anlage kommenden Hülsenkopf. Entsprechend wird die Hülse durch die zu verbindenden Teile hindurchgesteckt, bis der Hülsenkopf an dem ersten Teil zur Anlage kommt. Zur Herstellung einer kraftschlüssigen Verbindung ist ein Dorn, Stift oder Bolzen vorgesehen, der von der Vorderseite des ersten Teils her, durch den Hülsenkopf hindurch, in die Hülse eingesteckt und unter Aufwendung des Spreizbereichs in die Hülse hineingedrückt bzw. hineingepresst wird. Das Hineindrücken bzw. Hineinpressen des Dorns, Stifts oder Bolzens kann mit einem beliebigen Gegenstand, in vorteilhafter Weise mit einem Hammer erfolgen.

Der Hülsenkopf ist in vorteilhafter Weise in Form einer Ringscheibe ausgeführt, um nämlich eine hinreichende Fläche zur Anlage am äußeren Teil bereitzustellen. Der Durchgang beginnt am Hülsenkopf und erstreckt sich komplett durch die Hülse hindurch. Mit anderen Worten ist der Hülsenkopf in der Breite des Durchgangs offen.

In weiter vorteilhafter Weise ist das Material der Hülse im Spreizbereich geschwächt bzw. reduziert, um nämlich ein Aufweiten des Spreizbereichs zur Herbeiführung einer kraftschlüssigen Verbindung zu begünstigen. Dazu ist die Hülse hinter dem Hülsenkopf zum freien Ende hin, d.h. im Spreizbereich, geschlitzt. Ein einziger Schlitz, der sich axial durch die Hülse hindurch erstreckt, kann bereits ausreichen.

Alternativ ist es möglich, dass zwei, drei oder vier Schlitze, vorzugsweise äquidistant zueinander, vorgesehen sind. An dieser Stelle sei angemerkt, dass es sich bei den Schlitzen um durchgehende Schlitze handeln kann, die die Wandung des Spreizbereichs komplett öffnen. Ebenso ist es denkbar, dass die Schlitze in Form einer Materialreduktion ausgeführt sind, so dass ein zumindest geringer Steg mit einer gewissen Wanddicke verbleibt.

Der Schlitz bzw. die Schlitze können sich über die gesamte Länge des Spreizbereichs hinweg erstrecken. Ebenso ist es denkbar, dass der Schlitz zonal bzw. teilweise über die Länge des Spreizbereichs hinweg, ausgebildet ist. Auch ist es denkbar, dass der Schlitz vom Hülsenkopf aus sich tiefer in die Wandung der Hülse hinein erstreckt, nämlich zum freien Ende der Hülse bzw. des Spreizbereichs hin, so dass dort die Deformation abermals begünstigt ist.

Wie bereits zuvor erwähnt, verläuft der Schlitz bzw. verlaufen die Schlitze axial in der Hülse. Der Spreizbereich ist - im ursprünglichen Zustand, d.h. im noch nicht erweiterten Zustand - zylindrisch ausgebildet.

In ganz besonders raffinierter Weise ist hinter dem Hülsenkopf, zu diesem zumindest um die Dicke des Materials der zu verbindenden Teile beabstandet, eine Schulter ausgebildet, deren Querschnitt von einem runden Querschnitt abweicht. Im Konkreten kann die Schulter länglich, vorzugsweise oval oder in etwa rechteckig, ausgebildet sein. Wesentlich ist, dass die Schulter durch einen von einem runden Querschnitt abweichenden Durchgang der zu verbindenden Teile hindurch passt, nämlich in einer bestimmten Winkelposition.

Entsprechend den voranstehenden Ausführungen dient die Schulter zum Durchstecken durch die zu verbindenden Teile, wobei durch Drehen der Hülse im eingesteckten Zustand eine Verriegelung zum Hintergreifen der Teile mittels Schulter erfolgt. Um ein Drehen der Hülse zu begünstigen, kann der Hülsenkopf im Randbereich mit radialen Schlitzen versehen sei, um nämlich die Hülse ähnlich einer Schraube mittels Schraubenzieher oder dgl. drehen zu können.

Der bereits zuvor erwähnte Dorn, Stift oder Bolzen dient zum Aufweiten der Hülse in radialer Richtung nach außen. Dazu ist es von Vorteil, wenn der Dorn, Stift oder Bolzen aus Vollmaterial besteht.

In weiter vorteilhafter Weise umfasst der Dorn, Stift oder Bolzen einen zur äußeren Anlage an dem Hülsenkopf dienenden und die Einstecktiefe begrenzenden Bolzenkopf sowie einen sich zum Ende hin erweiternden Spreizkörper, der vorzugsweise in Kegelform bzw. als Kegelstumpf ausgebildet ist. Der Hülsenkopf definiert die maximale Einstecktiefe und schließt den Durchgang in der Hülse bzw. im Hülsenkopf. Es ist denkbar, den Bolzenkopf derart zu dimensionieren, dass er komplett in den Hülsenkopf hineinpasst und darin zur Anlage kommt. Im Rahmen einer solchen Ausgestaltung ließe sich der Hülsenkopf durch den Bolzenkopf flächig bzw. formschlüssig und bündig schließen.

Der sich zum Ende hin erweiternde Spreizkörper dient zum Aufweiten der Hülse bzw. des Spreizbereichs der Hülse. Die Kegelform bzw. Kegelstumpfform begünstigt das Aufweiten der Hülse.

In weiter vorteilhafter Weise ist der Spreizkörper mit einer Schulter, einem Hinterschnitt oder dgl. ausgestattet, der hinter dem Spreizbereich der Hülse, d.h. am Ende der Hülse, diese hintergreift. Letztendlich ist die Länge des Dorns, Stifts oder Bolzens und die Positionierung bzw. Ausgestaltung der Schulter des Spreizkörpers derart dimensioniert, dass die Schulter bei völlig eingestecktem Dorn, Stift oder Bolzen hinter dem Spreizbereich der Hülse, d.h. von der Rückseite her, an der Hülse zur hintergreifenden Anlage kommt, so dass eine sichere Verbindung geschaffen ist.

Entsprechend den voranstehenden Ausführungen ist der Dorn, Stift oder Bolzen derart dimensioniert, dass er im montierten Zustand zumindest geringfügig, vorzugsweise mit seinem Spreizkörper, rückseitig aus der Hülse herausragt. Entsprechend ist eine Demontage möglich, nämlich dadurch, dass man von der Rückseite her den Dorn, Stift oder Bolzen unter Überwindung des durch die Schulter definierten Rastwiderstandes zurückschlägt, nämlich den Spreizkörper des Dorns, Stifts oder Bolzens in die Hülse hineinschlägt, so dass der Dorn, Stift oder Bolzen von der Vorderseite her am Bolzenkopf greifbar und aus der Hülse wieder herausziehbar ist. Entsprechend ist die Verbindung reversibel.

In weiter vorteilhafter Weise ist der Dorn, Stift oder Bolzen im Bereich des Spreizkörpers mit einer Farbmarkierung ausgestattet. Im ordnungsgemäßen Montagezustand ist die Farbmarkierung von der Rückseite her sichtbar und indiziert den ordnungsgemäßen Montagezustand. Gleiches ist in Bezug auf den Bolzenkopf - mit einer Markierung am Rand des Bolzenkopfes möglich.

In materialmäßiger Hinsicht ist es von Vorteil, wenn die Hülse, der Dorn, Stift oder Bolzen aus Stahl gefertigt sind.

Schließlich sei darauf hingewiesen, dass die zuvor beschriebene Vorrichtung zur Befestigung beliebiger Teile miteinander dient, wobei nicht nur zwei Teile, vielmehr auch mehrere Teile, miteinander verbunden werden können. Die Vorrichtung eignet sich insbesondere zur Verwendung als Befestigungsmittel beim Befestigen einer als Unterfahrschutz dienenden Schürze an einer Leitplanke, wobei diese Verwendung lediglich ein vorteilhaftes Beispiel darstellt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein Ausführungsbeispiel einer er- findungsgemäßen Vorrichtung zum Verbinden zweier flächiger Teile am Beispiel der Montage einer als Unterfahrschutz dienenden Schürze an einer Leitplanke,
- Fig. 2: das in Fig. 1 gezeigte Ausführungsbeispiel der erfindungsgemäßen Vorrichtung einerseits im zusammengesteckten Zustand (beide Figuren oben) und andererseits den Dorn, Stift oder Bolzen separat (beiden Figuren unten),
- Fig. 3a: in einer schematischen Ansicht ein weiteres konkretes Ausführungs- beispiel des Dorns, Stifts oder Bolzens einer erfindungsgemäßen Vor- richtung,
- Fig. 3b: in einer schematischen Ansicht ein Ausführungsbeispiel der er- findungsgemäßen Vorrichtung im teilweise zusammengesteckten Zu- stand, wobei der Dorn, Stift oder Bolzen noch nicht ganz in den Be- festigungskörper eingesteckt ist,
- Fig. 3c: in einer schematischen Ansicht das Ausführungsbeispiel aus Fig. 3b, wobei der Dorn, Stift oder Bolzen bis zur Verrastung durch den Spreiz- körper in den Befestigungskörper eingesteckt ist,
- Fig. 4a: in einer schematischen Ansicht den Gegenstand aus Fig. 3c vom Dorn, Stift oder Bolzen her gesehen und
- Fig. 4b: in einer schematischen Seitenansicht, geschnitten, den Gegenstand aus Fig. 3c.

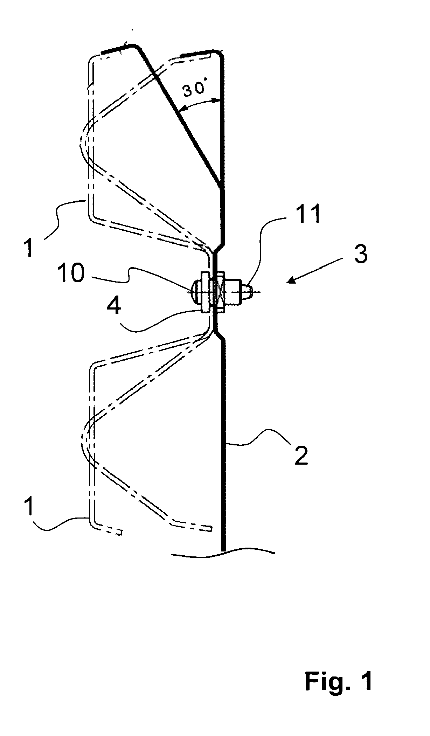

Fig. 1 zeigt am Beispiel einer an einer Leitplanke 1 mittels Halteelement 2 von der Rückseite her befestigten, in Fig. 1 nicht gezeigten Schürze den Einsatz einer erfindungsgemäßen Vorrichtung. Die Leitplanke ist fortan als erstes Teil 1 und das Halteelement als zweites Teil 2 bezeichnet.

Die Vorrichtung umfasst einen Befestigungskörper 3 zum Hinein- bzw. Hindurchstecken durch die Teile 1, 2, wobei der Befestigungskörper 3 einen von dem Teil 1 zur Anlage dienenden Kopf 4 umfasst. Des Weiteren umfasst der Befestigungskörper 3 einen zum Klemmen dienenden Spreizbereich 5, der einerseits zwischen den Teilen 1, 2 und andererseits hinter dem Teil 2 wirkt.

Erfindungsgemäß ist der Befestigungskörper 3 als Hülse 6 ausgebildet, nämlich mit einem an der Oberfläche des ersten Teils 1 zur Anlage kommenden Kopf 7.

Zur Aufweitung des Spreizbereichs 5 dient ein Bolzen 8, der von der Vorderseite des ersten Teils 1 her in die Hülse 6 eingesteckt und unter Aufweitung des Spreizbereichs 5 in die Hülse 6 hineingedrückt bzw. hineingepresst ist.

Fig. 1 zeigt ein Ausführungsbeispiel einer erfindungsgemäßen Vorrichtung im montierten Zustand, wonach nämlich die beiden Teile 1, 2 über die erfindungsgemäße Vorrichtung fest miteinander verbunden sind.

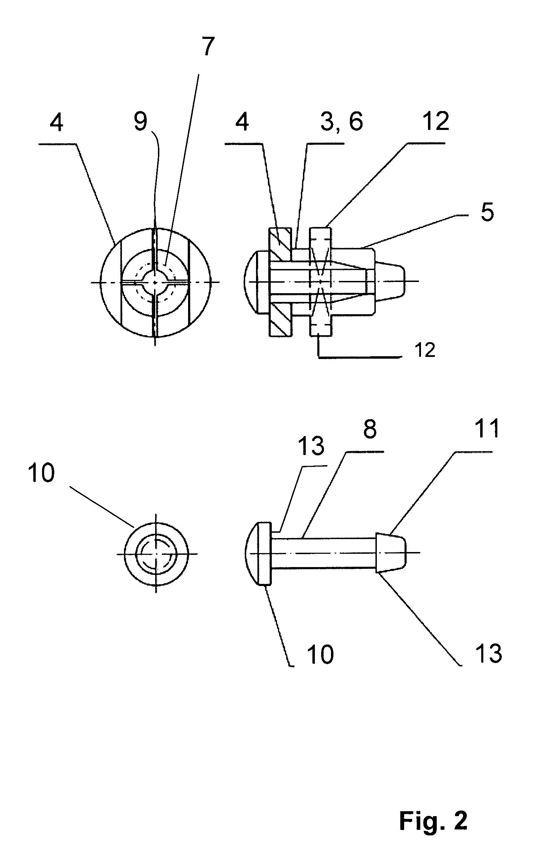

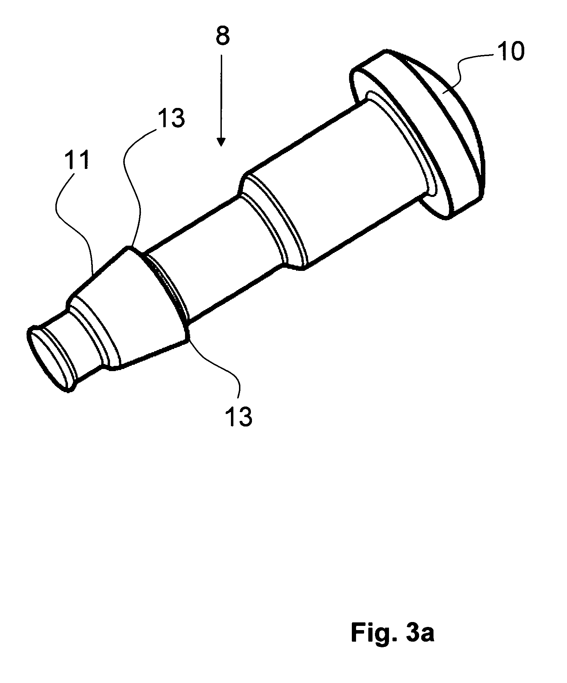

Die Fig. 2 und 3a bis 3c zeigen Ausführungsbeispiele der erfindungsgemäßen Vorrichtung im Detail.

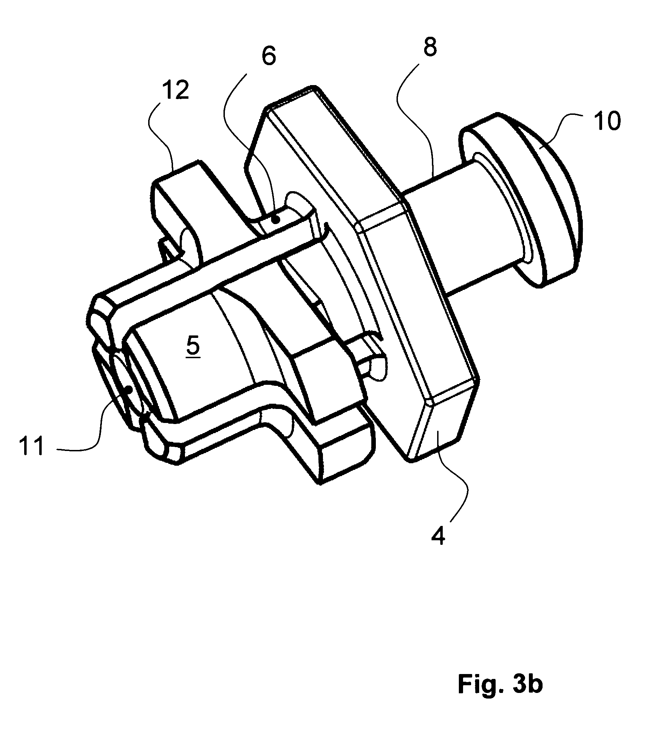

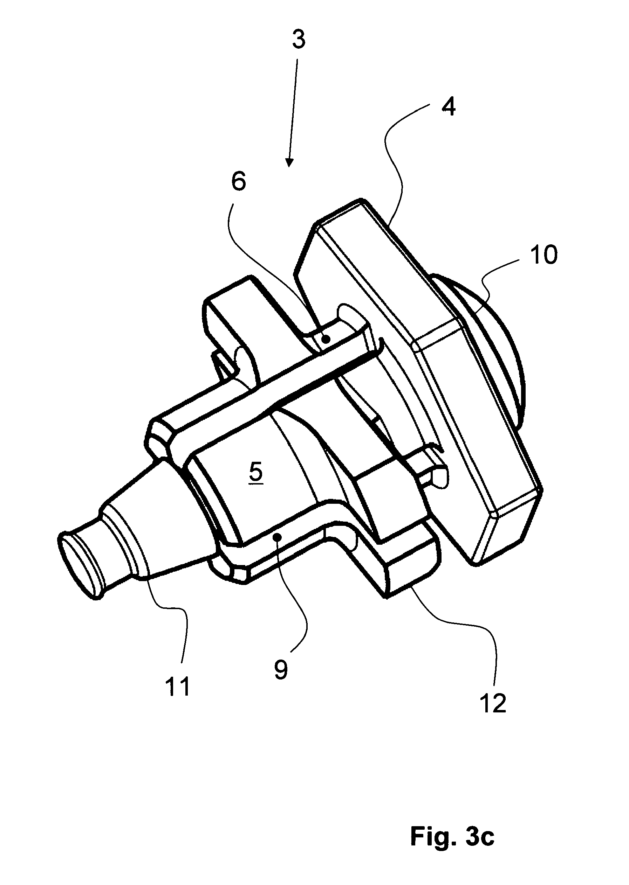

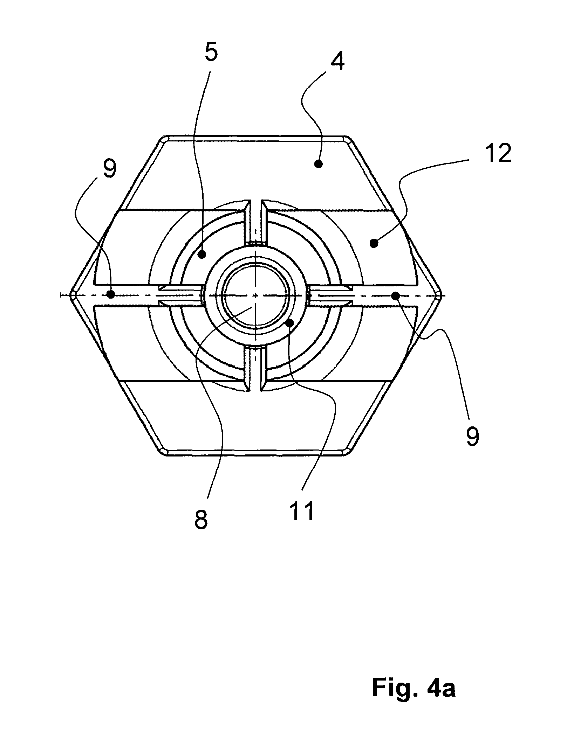

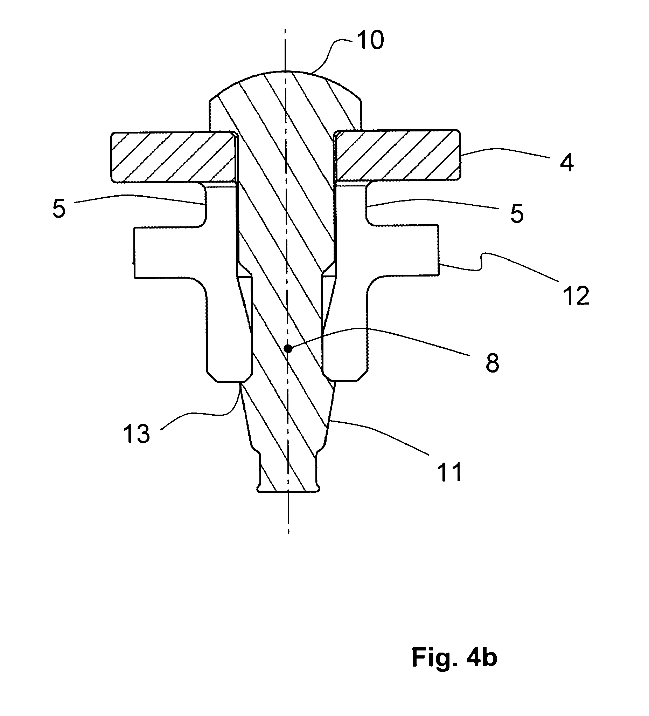

Wie bereits im allgemeinen Teil der Beschreibung ausgeführt, ist der Spreizbereich 5 geschlitzt ausgeführt, nämlich mit einem Schlitz 9, zwei gegenüberliegenden Schlitzen 9 oder vier kreuzweise ausgebildeten Schlitzen 9 versehen. Die Schlitze 9 sind insbesondere der Darstellung in Fig. 3b und 3c wie auch den Fig. 4a und 4b entnehmbar.

Die Fig. 2, 3b und 3c zeigen des Weiteren deutlich, dass der Hülsenkopf 4 unterschiedlich ausgebildet sein kann, beispielsweise in Form einer Ringscheibe oder mehrkantig. Der Bolzen 8 passt durch den in der Hülse 6 ausgebildeten Durchgang 7 hindurch.

Des Weiteren ist es von Vorteil, wenn der Bolzen 8 einen Bolzenkopf 10 umfasst, der entweder am Hülsenkopf 4 zur Anlage kommt oder in den Hülsenkopf 4 formschlüssig hinein passt. Beide Varianten sind denkbar.

Des Weiteren ist der Bolzen 8 mit einem Spreizkörper 11 ausgestattet, der zur Aufweitung des Spreizbereichs 5 der Hülse 6 dient.

Die Hülse 6 ist neben dem Kopf 4 mit einer Schulter 12 ausgestattet, wobei die Schulter 12 gegenüber dem Kopf 4 zumindest um die Dicke des Materials der zu verbindenden Teile beabstandet ist. Die Schulter 12 ist länglich, oval oder eckig ausgestattet, nämlich im Gegensatz zu dem Kopf 4 mit einem anderen Querschnitt. Die Schulter 12 dient zum Durchstecken durch die beiden zu verbindenden Teile 1, 2, die nämlich entsprechend geformt ausgebildete Durchgänge aufweisen. Durch Drehen der Hülse 6 im eingesteckten Zustand, d.h. durch Drehen der Schulter 12, lässt sich das zweite Teil 2 von der Rückseite her durch die Schulter 12 hintergreifen, wodurch eine Verriegelung vor der Endmontage möglich ist. Danach kann die kraftschlüssige Verbindung durch Einstecken des Bolzens 8 vorgenommen werden.

In Bezug auf den Bolzen 8 zeigen die Fig. 2 und 3a bis 3c deutlich, dass der Spreizkörper 11 in Form eines Kegelstumpfs ausgeführt ist und mit einem Hinterschnitt 13 endseitig an der Hülse 6 zur Anlage kommt, nämlich dann, wenn der Bolzen 8 komplett in die Hülse 6 eingesteckt ist. Eine sichere Verbindung ist geschaffen.

Die Fig. 4a und 4b zeigen den Gegenstand aus den Fig. 3b und 3c in Sinne einer technischen Zeichnung, nämlich gemäß Fig. 4a vom Bolzen 8 her und gemäß Fig. 4b in geschnittener Seitenansicht.

Unter Bezugnahme auf die Fig. 3a bis 4c sei an dieser Stelle angemerkt, dass der dort dunkel hinterlegte Spreizkörper 11 des Bolzens 8 farblich markiert sein kann, beispielsweise rot beschichtet bzw. lackiert sein kann. Dadurch ist eine optische Anzeige dahingehend geschaffen, dass sich der ordnungsgemäß montierte Zustand eindeutig erkennen lässt, nämlich dadurch, dass der komplette Spreizkörper - mit seiner roten Markierung - komplett aus der Hülse 6 herausragt, nämlich durch die Hülse 6 bzw. im Spreizbereich 5 hindurchgeschoben ist und endseitig aus dem Spreizbereich 5 der Hülse 6 herausragt. Eine ordnungsgemäße Montage ist dadurch möglich.

In Bezug auf Merkmale, die sich den Figuren nicht entnehmen lassen, sei zur Vermeidung von Wiederholungen auf den allgemeinen Teil der Beschreibung verwiesen.

Schließlich sei angemerkt, dass das voranstehend erörterte Ausführungsbeispiel zur beispielhaften Erörterung der beanspruchten Lehre dient, diese jedoch nicht auf das Ausführungsbeispiel einschränkt.

### Bezugszeichenliste

- 1: Leitplanke (erstes Teil)
- 2: Halteelement (zweites Teil)
- 3: Befestigungskörper
- 4: Kopf, Hülsenkopf
- 5: Spreizbereich
- 6: Hülse
- 7: Durchgang
- 8: Bolzen
- 9: Schlitz
- 10: Bolzenkopf
- 11: Spreizkörper (des Bolzens)
- 12: Schulter (der Hülse)
- 13: Hinterschnitt (des Spreizkörpers am Bolzen)

## Patentansprüche

1. Vorrichtung zum Verbinden mindestens zweier vorzugsweise flächiger Teile, mit einem Befestigungskörper (3) zum Hinein- bzw. Hindurchstecken durch die Teile (1, 2), wobei der Befestigungskörper (3) einen vor den Teilen (1, 2) zur Anlage dienenden Kopf (4) und einen in und/oder hinter den Teilen (1, 2) zum Klemmen dienenden Spreizbereich (5) aufweist,
**dadurch gekennzeichnet, dass** der Befestigungskörper (3) als Hülse (6) mit einem an der Oberfläche eines ersten Teils (1) zur Anlage kommenden Hülsenkopf (4) ausgeführt ist und dass ein Dorn, Stift oder Bolzen (8) vorgesehen ist, der von der Vorderseite des ersten Teils (1) her in die Hülse (6) eingesteckt und unter Aufweitung des Spreizbereichs (5) in die Hülse (6) hineingedrückt bzw. hineingepresst wird.

2. Vorrichtung nach Anspruch 1, **dadurch gekennzeichnet, dass** der Hülsenkopf (4) in Form einer Ringscheibe ausgeführt ist.

3. Vorrichtung nach Anspruch 1 oder 2, **dadurch gekennzeichnet, dass** die Hülse (6) hinter dem Hülsenkopf (4) zum freien Ende hin, im Spreizbereich (5), geschlitzt ist, wobei ein einziger Schlitz (9) oder zwei, drei bzw. vier Schlitze (9), vorzugsweise äquidistant zueinander, vorgesehen sein kann/können.

4. Vorrichtung nach Anspruch 3, **dadurch gekennzeichnet, dass** der Schlitz (9) bzw. die Schlitze sich über die gesamte Länge des Spreizbereichs (5) hinweg erstreckt/erstrecken.

5. Vorrichtung nach Anspruch 3 oder 4, **dadurch gekennzeichnet, dass** der Schlitz (9) bzw. die Schlitze axial verläuft/verlaufen.

6. Vorrichtung nach einem der Ansprüche 1 bis 5, **dadurch gekennzeichnet, dass** der Spreizbereich (5) - im ursprünglichen Zustand - zylindrisch ausgebildet ist.

7. Vorrichtung nach einem der Ansprüche 1 bis 6, **dadurch gekennzeichnet, dass** hinter dem Hülsenkopf (4), zu diesem zumindest um die Dicke des Materials der zu verbindenden Teile (1, 2) beabstandet, eine Schulter (12) ausgebildet ist, deren Querschnitt von einem runden Querschnitt abweicht, wobei die Schulter (12) länglich, vorzugsweise oval oder in etwa rechteckig, ausgebildet sein kann.

8. Vorrichtung nach Anspruch 7, **dadurch gekennzeichnet, dass** Form der Schulter (12) in etwa den Durchgängen in den zu verbindenden Teilen (1, 2) angepasst ist, wobei die Schulter (12) durch die Durchgänge in einer bestimmten Winkelposition hindurch passt.

9. Vorrichtung nach Anspruch 7 oder 8, **dadurch gekennzeichnet, dass** die Schulter (12) zum Durchstecken durch die zu verbindenden Teile (1, 2) dient, wobei durch Drehen der Hülse (6) im eingesteckten Zustand eine Verriegelung durch Hintergreifen der Teile (1, 2) durch die Schulter (12) erfolgt.

10. Vorrichtung nach einem der Ansprüche 1 bis 9, **dadurch gekennzeichnet, dass** der Dorn, Stift oder Bolzen (8) aus Vollmaterial besteht.

11. Vorrichtung nach einem der Ansprüche 1 bis 10, **dadurch gekennzeichnet, dass** der Dorn, Stift oder Bolzen (8) einen zur äußeren Anlage an dem Hülsenkopf (4) dienenden und die Einstecktiefe begrenzenden Bolzenkopf (10) sowie einen sich zum endseitigen Ende hin erweiternden Spreizkörper (11), vorzugsweise in Kegelform bzw. als Kegelstumpf ausgebildet, umfasst, wobei der Spreizkörper (11) eine Schulter, einen Hinterschnitt (13) oder dgl. aufweisen kann, der hinter dem Spreizbereich (5) der Hülse (6) diese hintergreift.

12. Vorrichtung nach Anspruch 11, **dadurch gekennzeichnet, dass** der Dorn, Stift oder Bolzen (8) derart dimensioniert ist, dass er im montierten Zustand zumindest geringfügig, vorzugsweise mit seinem Spreizkörper (11), rückseitig aus der Hülse (6) herausragt.

13. Vorrichtung nach Anspruch 12, **dadurch gekennzeichnet, dass** der Dorn, Stift oder Bolzen (8) im Bereich des Spreizkörpers (11) mit einer Farbmarkierung ausgestattet ist, die im ordnungsgemäßen Montagezustand rückseitig sichtbar ist.

14. Vorrichtung nach einem der Ansprüche 1 bis 13, **dadurch gekennzeichnet, dass** die Hülse (6) und der Dorn, Stift oder Bolzen (8) aus Stahl gefertigt sind.

15. Vorrichtung nach einem der Ansprüche 1 bis 14, **gekennzeichnet durch** die Verwendung als Befestigungsmittel zum Befestigen einer als Unterfahrschutz dienenden Schürze an einer Leitplanke.
